Europäisches Patentamt

European Patent Office

Office européen des brevets

(11) Veröffentlichungsnummer: **0 242 407**

**A2**

(12) **EUROPÄISCHE PATENTANMELDUNG**

(21) Anmeldenummer: 86105226.4

(22) Anmeldetag: 16.04.86

(51) Int. Cl.⁴: **G01B 11/30**

(30) Priorität: **26.03.86 DE 3610154**

(43) Veröffentlichungstag der Anmeldung:
**28.10.87 Patentblatt 87/44**

(84) Benannte Vertragsstaaten:
**CH FR GB IT LI SE**

(71) Anmelder: **Hommelwerke GmbH**
**Alte Tuttlinger Strasse 20**
**D-7730 VS-Schwenningen(DE)**

(72) Erfinder: **Ulbers, Gerd, Dr.**
**Lindenbaumstrasse 10**
**D-7730 VS-Weilersbach(DE)**

(74) Vertreter: **Leine, Sigurd, Dipl.-Ing. et al**
**Dipl.-Ing. Sigurd Leine Dipl.-Phys. Dr.**
**Norbert König Patentanwälte**
**Burckhardtstrasse 1**
**D-3000 Hannover 1(DE)**

(54) **Vorrichtung zur Messung kleiner Längen.**

(57) Vorrichtung zur Messung kleiner Längen, mit einer in Richtung der zu messenden Länge beweglich gelagerten Tastspitze, mit einem Wandler zur Umwandlung der Bewegung der Tastspitze in entsprechende elektrische Signale und mit einer Anzeigeeinrichtung zur Anzeige dieser Signale. Der Wandler enthält ein optisches Interferometer, das einen Meßwellenleiter aufweist, dessen eines Ende mit einem Laser und dessen anderes Ende mit einer optischen Einrichtung verbunden ist, die das Licht auf einen im Abstand angeordneten Meßspiegel richtet, der das Licht zu der optischen Einrichtung zurückwirft. Der Meßspiegel ist mit der Tastspitze verbunden. Außerdem weist das Interferometer einen Bezugswellenleiter auf, der mit dem Meßwellenleiter gekoppelt ist und an seinem einen Ende einen Spiegel und an seinem anderen Ende einen lichtelektrischen Wandler aufweist, der mit der Anzeigeeinrichtung zur Anzeige des elektrischen Ausgangssignals des elektrischen Wandlers verbunden ist. Die Vorrichtung läßt sich kostengünstig und einfach als optoelektrische integrierte Einheit ausbilden. Sie ermöglicht eine Messung mit einer Genauigkeit in der Größenordnung der halben Wellenlänge des Lichts des Lasers oder auch weit darunter auch bei großen zu messenden Längen mit hoher Linearität. Die Vorrichtung ist auch zur Messung sehr schneller Längenänderungen bei kleinen Auflagedrücken der

Tastspitze geeignet

FIG. 2

## Vorrichtung zur Messung kleiner Längen

Die Erfindung betrifft eine Vorrichtung der im Oberbegriff des Anspruchs 1 genannten Art zur Messung kleiner Längen.

Vorrichtungen der betreffenden Art zur Messung kleiner Längen sind seit langem bekannt. Beispielsweise die DE-PS 11 00 978 zeigt in Abbildung 9 eine solche Vorrichtung, die als mechanischinduktiver Wandler ausgebildet ist. Die Tastspitze bewegt einen Eisenkern in einem Spulensystem, das in eine Meßbrücke einbezogen ist, die ein elektrisches Ausgangssignal in Abhängigkeit von den Bewegungen der Tastspitze abgibt. Das verhältnismäßig hohe Gewicht des zu bewegenden Eisenkerns ist nachteilig für die Abtastgeschwindigkeit und bewirkt außerdem einen starken Verschleiß der Tastspitze. Dies um so mehr, je feiner die Tastspitze ist. Feine Tastspitzen sind jedoch zur Abtastung der Feinstruktur einer Oberfläche erforderlich. Ein weiterer Nachteil ist die begrenzte Linearität, insbesondere bei großen Meßhüben.

Der Erfindung liegt die Aufgabe zugrunde, eine Vorrichtung der betreffenden Art zur Messung kleiner Längen zu schaffen, deren bewegte Teile ein niedriges Gewicht haben können, deren Tastspitze einen kleinen Abrundungsradius haben kann und die darüber hinaus eine hohe Abtastgeschwindigkeit bei der Abtastung der Feinstruktur einer Oberfläche sowie eine hohe Linearität auch bei großen Meßhüben ermöglicht.

Die der Erfindung zugrundeliegende Aufgabe wird durch die im Kennzeichen des Anspruchs 1 angegebene Lehre gelöst.

Die Erfindung beruht auf dem Grundgedanken, die Stellung bzw. die Bewegungen des mechanischen Abtastgliedes für die abzutastende Länge praktisch gewichtslos mit einer optischen Methode allein mit Hilfe einer spiegelnden Oberfläche an dem Abtastglied mit Hilfe von optischen Phasenmessungen abzutasten. Die Phasenmessung erfolgt dabei mit Hilfe eines Interferometers, das in Teilen aus der Zeitschrift "Laser und Optoelektronik", 1/1984, S.19, Bild 3, bekannt ist. Dieses bekannte Interferometer wird jedoch so abgewandelt, daß das Licht aus dem Meßwellenleiter mit Hilfe einer optischen Einrichtung ausgekoppelt, auf den mit der Tastspitze verbundenen Spiegel geleitet und von diesem auf dem gleichen Wege in den Meßwellenleiter zurückgeführt wird. Außer den Mitteln zur Halterung und Führung der Tastspitze ist diese mit keinem zusätzlichen Gewicht belastet, so daß das Gewicht der abtastenden Mittel minimal ist, so daß ein geringer Auflagedruck genügt, damit die Tastspitze beispielsweise bei der Abtastung der Feinkontur einer Werkstückoberfläche sicher der Oberfläche folgt und damit genau die der Oberflächenkontur entsprechenden Längenänderungen abtastet, die dann durch das Interferometer in entsprechende elektrische Signale umgewandelt werden. Die Abtastgeschwindigkeit kann dabei gleichzeitig sehr hoch sein.

Die optische Einrichtung zur Auskopplung des Lichts auf den Meßwellenleiter besteht zweckmäßigerweise aus einem Beugungsgitter, wie es an sich beispielsweise durch die Zeitschrift "LASER MAGAZIN", 4/1985, S.75 in Verbindung mit einem Abtastkopf zur Abtastung von Schallplatten mit optischer Aufzeichnungsspur bekannt ist. Es eignen sich aber auch andere optische Vorrichtungen, mit denen das Licht asu dem Meßwellenleiter auf den Spiegel gerichtet werden kann, und zwar vorzugsweise in Form eines Parallelstrahls oder Parallelstrahlenbündels, obwohl auch in manchen Fällen eine teilweise oder vollständige Fokussierung auf den Meßspiegel zweckmäßig sein kann.

Die bewegliche Lagerung der Tastspitze kann die Form eines doppelarmigen Hebels haben, an dessen einem Ende sich die Tastspitze und an dessen anderem Ende sich der Meßspiegel befindet. Es ist aber auch möglich, nur einen einarmigen Hebel zu verwenden, bei dem sich der Spiegel im Bereich der Tastspitze befindet. Dadurch wird die bei Auslenkungen der Tastspitze zu bewegende Masse noch weiter verringert. Der Meßspiegel kann sich aber auch an dem einen Ende eines parallel geführten Meßstößels befinden, an dessen anderem Ende sich die Tastspitze befindet.

Bei beiden Formen der beweglichen Lagerung, insbesondere aber bei der Hebellagerung der Tastspitze, ist es zweckmäßig, den Meßspiegel als Tripelspiegel oder als Glaskugel auszuführen, so daß sichergestellt ist, daß auch bei Änderungen der Winkelstellung des Meßspiegels das Licht immer in die gleiche Richtung zu der optischen Einrichtung zurückgeworfen wird, die das Licht aus dem Meßwellenleiter auskoppelt und es auch wieder einkoppelt.

Obwohl bei Längenmessungen, die im Bereich unterhalb der halben Wellenlänge des von dem Laser abgegebenen Lichts als Anzeigeeinrichtung auch ein Spannungs-oder Strommesser verwendbar ist, dessen Ausschlag der Intensität des von dem lichtelektrischen Wandler aufgefangenen Lichts bzw. der von diesem abgegebenen elektrischen Spannung oder dem entsprechenden Strom entspricht, ist es zur Erfassung eines großen Meßbereichs mit einem Vielfachen der Wellenlänge des Meßlichts zweckmäßig, als Anzeigeeinrichtung einen Zähler zu verwenden, der die der gemessenen Längenänderung entsprechenden Lichtintensitätsänderungen aufgrund der Interferenz zählt und somit einen Zählwert anzeigt, der unter Berücksichtigung der Wellenlänge des Meßlichts völlig proportional ist der von der Tastspitze abgetasteten Länge oder Längenänderung. Ein Meßvorgang läuft dabei beispielsweise so ab, daß die Tastspitze auf den Anfang der zu messenden Länge gebracht und dabei der Zähler auf null gestellt wird. Danach wird die Tastspitze auf den Endwert der zu messenden Länge gebracht und der Zähler abgelesen. Soll eine neue Länge gemessen werden, so muß dieser Vorgang wiederholt werden.

Um eine Nullstellung des Zählers zu vermeiden und Längen eindeutig in unterschiedlichen Auslenkungsrichtungen der Tastspitze messen zu können, ist es zweckmäßig, gemäß Anspruch 7 dafür Sorge zu tragen, die Richtung der Bewegung der Tastspitze festzustellen und in Abhängigkeit von dieser Richtung die Zählrichtung des als Vor-Rückwärtszähler ausgebildeten Zählers zu steuern. Die Feststellung der Richtung der Bewegung der Tastspitze erfolgt in der Weise, daß von der Meßleitung mit Hilfe eines Kopplers, wie er beispielsweise durch die Dissertation von Dipl.-Ing. H. Schlaak, Berlin 1984, S. 28,29 bekannt ist, ein Teil des Lichts aus dem Bezugswellenleiter ausgekoppelt und mit Hilfe eines Phasenmodulators, wie er beispielsweise durch die Zeitschrift "Laser und Optoelektronik", 1/1984, S. 27, Bild 33, bekannt ist, in einer gegenüber der Phasenlage am Ende des Bezugswellenleiters um 90° verschobenen Phasenlage an einen weiteren lichtelektrischen Wander geführt wird, so daß die beiden lichtelektrischen Wandler bei Bewegungen der Tastspitze zwei um 90° gegeneinander verschobene Meßspannungen abgeben, die zusammen ein Drehfeld bilden, dessen Drehrichtung der Bewegungsrichtung der Tastspitze entspricht. Mit Hilfe dieser Drehrichtung wird dann die Zählrichtung des Vor-Rückwärtszählers gesteuert. Diese Art der Erkennung der Bewegungsrichtung ist für sich beispielsweise in der Dissertationsschrift "Ein Laser-Interferometer zur fotoelektrischen Bewegungsvermessung in beiden Lateralkoordinaten" von Gerd Ulbers, 1981, Universität Hannover, S. 58 ff, insbesondere S. 68, Abb. 29, beschrieben.

In dieser Dissertationsschrift ist auch eine Möglichkeit beschrieben, die Meßgenauigkeit durch Unterteilung der Periode der Drehspannung zu erhöhen, s. dort Abschnitt 10.4. Die Weiterbildung der Erfindung gemäß Anspruch 8 besteht darin, diese Signalperiodenunterteilung auch bei der erfindungsgemäßen Vorrichtung zur Erhöhung der Auslösung einzusetzen.

Eine besonders zweckmäßige Weiterbildung der erfindungsgemäßen Grundlehre ist in Anspruch 9 angegeben, wonach der Meßwellenleiter, der Bezugswellenleiter und gegebenenfalls auch der Abzweigwellenleiter in an sich bekannter Weise in oder auf der Oberfläche einer gemeinsamen Platte gebildet sind. Laser und/oder lichtelektrische Wandler sind ganz einfach an die Seitenkanten der Platte angeschlossen, an denen auch die Wellenleiter münden. Der Spiegel des Bezugswellenleiters ist ganz einfach durch eine Verspiegelung der Kante im Bereich des an dieser Kante mündenden Bezugswellenleiters gebildet. Die Ausbildung der Wellenleiter in der Platte kann dabei in an sich bekannter Weise erfolgen, und zwar entweder durch Aufbringen von Glasfasern auf die Platte oder durch Ausbildung der Wellenleiter in der Oberfläche der Platte, wie das beispielsweise an sich durch die Zeitschrift "Laser und Optoelektronik", 1984, Nr. 1, S. 26, Bild 31, bekannt ist. Auch die Phaseneinstelleinrichtung bei der Weiterbildung gemäß Anspruch 7 läßt sich unmittelbar auf der Oberfläche der Platte ausbilden, wie das an sich beispielsweise bereits durch die oben zitierte Zeitschrift "Laser und Optoelektronik", 1983, S. 112, Bild 3, bekannt ist. Schließlcih läßt sich auch gemäß einer anderen Weiterbildung die optische Einrichtung, die das Licht aus dem Meßwellenleiter auf den Meßspiegel richtet und auch von dort wieder aufffängt, unmittelbar auf der Oberfläche der Platte ausbilden, und zwar in Form eines auf der Platte angebrachten Beugungsgitters entsprechend der oben zitierten Literaturstelle "LASER MAGAZIN", 1985, S. 75. Insgesamt lassen sich also alle optischen bzw. optoelektrischen Teile wie auch die lichtelektrischen Wandler und/oder der Laser der erfindungsgemäßen Vorrichtung auf einer einzigen Platte integrieren, so daß eine einfache, billige Fertigung bei geringsten Abmessungen möglich ist. Um Temperatureinflüsse fernzuhalten, sitzt die gesamte Platte mit den optoelektronischen Komponenten auf einem geregelten Peltierelement.

Anhand der Zeichnung soll die Erfindung näher erläutert werden.

Fig. 1 zeigt den wesentlichen optoelektronischen Teil eines Ausführungsbeispiels der Erfindung in der Draufsicht,

Fig. 2 ist eine Seitenansicht der Fig. 1 einschließlich des mechanischen Abtastteils der Vorrichtung,

Fig. 3 zeigt eine Abwandlung der Fig. 2 und

Fig. 4 zeigt ein Blockschaltbild der an die opto elektrische Einrichtung gemäß Fig. 1 angeschlossenen Anzeigeeinrichtung.

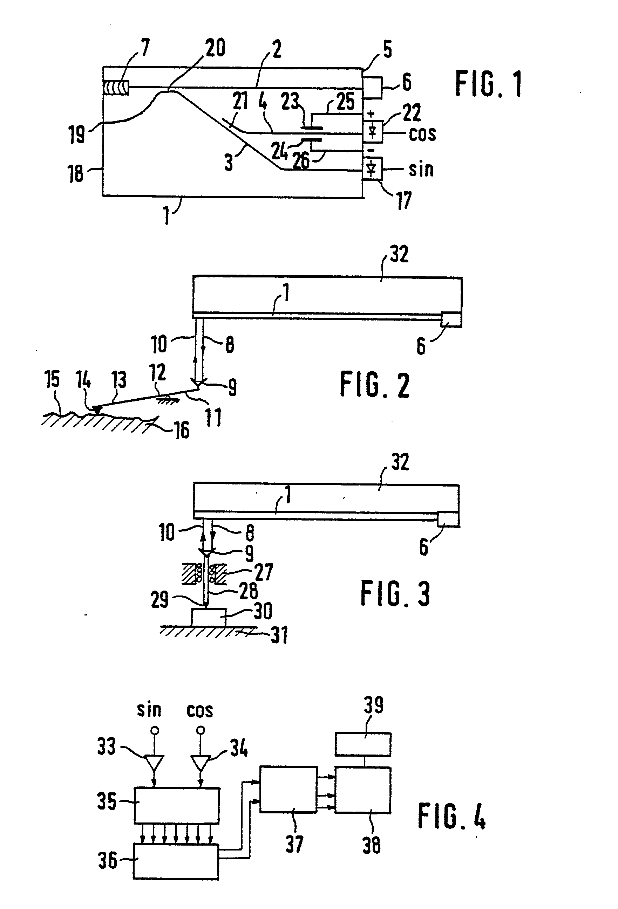

Die optoelektronische Einrichtung gemäß Fig. 1 zeigt eine Platte 1 aus Lithiumniobatkristall oder Siliziumkristall, in deren Oberfläche in an sich bekannter, oben angegebener Weise ein Meßwellenleiter 2, ein Bezugswellenleiter 3 und ein Abzweigwellenleiter 4 gebildet sind. Der Meßwellenleiter führt zu einer Kante 5 der Platte 1, wo ein Laser 6 unmittelbar beispielsweise durch Kleben so angebracht ist, daß sein Licht in den Meßwellenleiter 2 gelangt. Am anderen Ende mündet der Meßwellenleiter 2 in ein Beugungsgitter 7, das das Licht im wesentlichen senkrecht zu der Platte 1 auskoppelt, wie das aus der Seitenansicht in Fig. 2 durch eine Pfeillinie 8 angedeutet ist. Das Licht gelangt auf einen Tripelspiegel 9, der es entsprechend einer Pfeillinie 10 zu dem Beugungsgitter 7 zurückwirft, das es in den Meßwellenleiter 2 zurückleitet. Das Licht gemäß den Pfeillinien 8 und 10 verläuft im wesentlichen parallel.

Der Tripelspiegel 9 befindet sich am Ende eines Armes 11 eines zweiarmigen Hebels 12, dessen anderer Arm 13 an seinem Ende eine Tastspitze 14 aufweist, die zur Verdeutlichung ihrer Funktion als auf einer Oberfläche 15 eines Werkstückes 16 aufliegend dargestellt ist, deren Höhenprofil als Längenänderung in Abhängigkeit von der Profilrichtung beispielsweise festgestellt werden soll.

Der in Fig. 1 gezeigte Bezugswellenleiter 3 erstreckt sich zu der Kante 5, an der eine Fotodiode 17 so angebracht ist, daß sie das Licht aus dem Bezugswellenleiter 3 auffängt und es in ein entsprechendes elektrisches Strom-oder Spannungssignal umwandelt. Das andere Ende des Bezugswellenleiters 3 erstreckt sich bis zu einer Kante 18 der Platte 1, die glatt geschliffen und wenigstens im Bereich der Mündung des Bezugswellenleiters 3 verspiegelt ist, so daß an dem Ende des Bezugswellenleiters 3 ein Spiegel 19 gebildet ist.

Der Bezugswellenleiter 3 nähert sich über eine kurze Wegstrecke dem Meßwellenleiter 2, so daß ein Koppelelement 20 gebildet ist. Der Abzweigwellenleiter 4 nähert sich mit seinem Ende dem Bezugswellenleiter 3, so daß ein Koppelelement 21 gebildet ist. Mit seinem anderen Ende mündet der Abzweig wellenleiter 4 im Bereich einer dort angebrachten Fotodiode 22, die das Licht aus dem Abzweigwellenleiter 4 auffängt und in ein entsprechendes elektrisches Spannungssignal umwandelt. Über eine kurze Wegstrecke sind zu beiden Seiten des Abzweigwellenleiters 4 Elektroden 23 und 24 angeordnet, die über Leitungen 25 und 26 an eine einstellbare Gleichspannungsquelle angeschlossen sind, was rein schematisch durch ein Plus-und Minuszeichen angedeutet ist. Durch Einstellung der Gleichspannung an den Elektroden 25 und 26 ist die Phasenlage des Lichts an der Fotodiode 22 gegenüber der des Lichts an der Fotodiode 17 so eingestellt, daß die Phase des elektrischen Stroms am Ausgang der Fotodiode 22 gegenüber der an der Fotodiode 17 um 90° verschoben ist.

Um die Stabilität zu vergrößern, ist mit der Platte 1 in den Fig. 2 und 3 ein Peltierelement 32 fest verbunden, das die Aufgabe hat, die Temperatur des Interferometers auf einen konstanten Wert zu stabilisieren.

Zur Eliminierung von Rausch-und Drifterscheinungen kann der Laser oder das Laserlicht mit einer Trägerfrequenz moduliert sein, das dann in üblicher Technik zur trägerfrequenten Signalverarbeitung weiterverarbeitet wird.

Wird bei Gebrauch der Einrichtung gemäß den Fig. 1 und 2 die Tastspitze 14 relativ zu der Oberfläche 15 des Werkstücks 16 in der Ebene der Oberfläche 15 verschoben, so ändert sich die Höhenlage der Tastspitze 14 entsprechend dem Feinprofil der Oberfläche 15. Der Tripelspiegel 9 ändert seine Lage relativ zu dem Beugungsgitter 7 auf der Platte 1 entsprechend, so daß sich der Weg des Lichts entlang den Pfeillinien 8 und 10 zu dem Tripelspiegel 9 hin und zurück entsprechend ändert, wodurch sich das Interferenzmuster in dem Bezugswellenleiter 3 ändert, das proportional der Bewegung der Tastspitze 14 ist und an der Fotodiode 17 als Änderung des Ausgangsstromes erscheint.

Fig. 3 zeigt eine Abwandlung der Ausführungsform gemäß Fig. 1. Übereinstimmende Teile sind mit gleichen Bezugsziffern versehen. Der Unterschied besteht darin, daß sich der Tripelspiegel 9 am oberen Ende eines durch eine Führung 27 vertikal verschieblich gehaltenen Meßstößels 28 angeordnet ist, an dessen unteren Ende sich eine Tastspitze 29 befindet, die auf einem Werkstück 30 aufliegt, das auf einem Tisch 31 ruht.

Fig. 4 zeigt ein Blockschaltbild zur Auswertung und Anzeige der Ausgangsspannungen der Fotodioden 17 und 22, die zur Verdeutlichung ihrer gegenseitigen Phasenlage als Sinus-und Kosinus-Signale angedeutet sind. Nach Strom-Spannungswandlung und Verstärkung in Verstärkern 33 und 34 folgt die Drehfeldinterpolation in einem Drehfeldinterpolator 35, der eine volle Periode des Drehfeldes von 360° in n Teile unterteilen kann. Eine volle Drehfeldperiode entspricht einer Verschiebung des Meßspiegels um λ/2 der Laserwellenlänge. Ein folgender Rechteckformer 36 mit Zählrichtungsdiskriminator 37 bereitet das Signal für einen Vor-Rückwärtszähler 38 auf, an den eine Anzeigeeinrichtung 39 angeschlossen ist. Bewegt sich der Tripelspiegel 9 in eine Richtung, so eilt das Signal an der Fotodiode 22 dem an der Fotodiode 17 um 90° vor,und der Vor-Rückwärtszähler 38 zählt in eine Richtung. Kehrt der Tripelspiegel 9 die Bewegungsrichtung um, so eilt das Signal an der Fotodiode 22 dem an der Fotodiode 17 um 90° nach, und der Vor-Rückwärtszähler 38 kehrt auch seine Zählrichtung um. Der Vor-Rückwärtszähler 38 zählt jeweils n Teile von Drehfeldumläufen. Die so erreichbare Auflösung für den Meßhub hängt somit nur von der Größe der Drehfeldunterteilung und von der Stabilität des Gesamtsystems ab.

## Ansprüche

1. Vorrichtung zur Messung kleiner Längen, mit einer in Richtung der zu messenden Länge beweglich gelagerten Tastspitze, mit einem Wandler zur Umwandlung der Bewegungen der Tastspitze in entsprechende elektrische Signale und mit einer Anzeigeeinrichtung zur Anzeige dieser Signale, **dadurch gekennzeichnet**, daß der Wandler ein optisches Interferometer enthält, das einen Meßwellenleiter (2) aufweist, dessen eines Ende mit einem Laser (6) und dessen anderes Ende mit einer optischen Einrichtung verbunden ist, die das Licht auf einen im Abstand angeordneten Meßspiegel richtet, der das Licht zu der optischen Einrichtung zurückwirft und der mit der Tastspitze oder einem sich mit dieser bewegenden Teil (12) verbunden ist, daß das Interferometer einen Bezugswellenleiter (3) aufweist, der mit dem Meßwellenleiter (2) gekoppelt ist, an seinem einen Ende einen Spiegel (19) und an seinem anderen Ende einen lichtelektrischen Wandler (17) aufweist, der mit der Anzeigeeinrichtung zur Anzeige des elektrischen Ausgangssignals des lichtelektrischen Wandlers (17) verbunden ist.

2. Vorrichtung nach Anspruch 1, **dadurch gekennzeichnet**, daß die optische Einrichtung ein Beugungsgitter (7) ist, das das Licht im wesentlichen parallel auf den Spiegel lenkt.

3. Vorrichtung nach Anspruch 1, **dadurch gekennzeichnet**, daß sich der Meßspiegel an einem Ende eines zweiarmigen Hebels (12) befindet, dessen anderes Ende die Tastspitze (14) aufweist.

4. Vorrichtung nach Anspruch 1, **dadurch gekennzeichnet**, daß sich der Meßspiegel an einem Ende eines parallel geführten Meßstößels (28) befindet, dessen anderes Ende die Tastspitze (29) aufweist.

5. Vorrichtung nach Anspruch 1, **dadurch gekennzeichnet**, daß der Meßspiegel ein Planspiegel, ein Tripelspiegel (9) oder eine Glaskugel ist.

6. Vorrichtung nach Anspruch 1, **dadurch gekennzeichnet**, daß die Anzeigeeinrichtung ein Zähler ist.

7. Vorrichtung nach Anspruch 6, **dadurch gekennzeichnet**, daß der Bezugswellenleiter mit einem Abzweigwellenleiter (4) gekoppelt ist, dessen Ende mit einem weiteren lichtelektrischen Wandler (22) verbunden ist und der eine Phaseneinstelleinrichtung (23-26) zur Einstellung der Phase an dem weiteren lichtelektrischen Wandler (22) aufweist, derart, daß die Phase des Lichts an dem weiteren lichtelektrischen Wandler (22) um 90° verschoben ist gegenüber dem an den Bezugswellenleiter (3) angeschlossenen lichtelektrischen Wandler (17) und so ein Drehfeld gebildet ist, und daß eine Einrichtung (Fig. 4; 17-26) vorgesehen ist, die die Drehrichtung des Drehfeldes bestimmt und in Abhängigkeit davon die Zählrichtung des als Vor-Rückwärtszähler ausgebildeten Zählers steuert.

8. Vorrichtung nach Anspruch 7, **dadurch gekennzeichnet**, daß eine Teilereinrichtung vorgesehen ist, die einen Drehfeldumlauf in eine Anzahl von Einzelwerten unterteilt, und daß der Vor-Rückwärtszähler diese Einzelwerte zählt.

9. Vorrichtung nach Anspruch 1 oder 7, **dadurch gekennzeichnet**, daß der Meßwellenleiter (2), der Bezugswellenleiter (3) bzw. der Abzweigwellenleiter (4) in an sich bekannter Weise in oder auf der Oberfläche einer gemeinsamen Platte (1) gebildet sind, daß der Laser (6) und/oder die lichtelektrischen Wandler (17, 22) unmittelbar an einer Kante (5) der Platte (1) angebracht sind, an der das zugehörige Ende des jeweiligen Wellenleiters (2, 3, 4) endet, und daß der an dem einen Ende des Bezugswellenleiters (3) angeordnete Spiegel (19) durch eine verspiegelte Seitenkante (18) der Platte (1) gebildet ist, bis zu der sich der Bezugswellenleiter (3) erstreckt.

10. Vorrichtung nach Anspruch 9, **dadurch gekennzeichnet**, daß die Phaseneinstelleinrichtung durch zwei Elektroden (23, 24) gebildet ist, die sich zu beiden Seiten des Abzweigleiters (4) über einen Teil desselben erstrecken und an eine einstellbare Gleichspannung angeschlossen sind.

11. Vorrichtung nach Anspruch 9, **dadurch gekennzeichnet**, daß die das Licht auf den Meßspiegel richtende optische Einrichtung durch ein Beugungsgitter (7) gebildet ist, das auf der Oberfläche der Platte (1) angeordnet ist.

12. Vorrichtung nach Anspruch 1, **dadurch gekennzeichnet**, daß die lichtelektrischen Wandler (17, 22) und/oder der Laser in die Platte (1) integriert sind.

0 242 407

FIG. 1

FIG. 2

FIG. 3

FIG. 4